Europäisches Patentamt

European Patent Office

Office européen des brevets

(19)

(11) EP 0 676 114 B1

# (12) FASCICULE DE BREVET EUROPEEN

(45) Date de publication et mention
de la délivrance du brevet:
**21.10.1998 Bulletin 1998/43**

(21) Numéro de dépôt: **94902807.0**

(22) Date de dépôt: **14.12.1993**

(51) Int Cl.6: **H04N 7/32**

(86) Numéro de dépôt international:
**PCT/FR93/01241**

(87) Numéro de publication internationale:
**WO 94/15436 (07.07.1994 Gazette 1994/15)**

(54) **DISPOSITIF D'ESTIMATION HIERARCHIQUE DU MOUVEMENT DE SEQUENCE D'IMAGES**

VORRICHTUNG ZUR HIERARCHISCHEN BEWEGUNGSSCHÄTZUNG IN BILDSEQUENZEN

HIERARCHICAL ESTIMATION DEVICE FOR THE IMAGE FRAME MOTION

(84) Etats contractants désignés:
**DE FR GB IT NL**

(30) Priorité: **24.12.1992 FR 9215709**

(43) Date de publication de la demande:
**11.10.1995 Bulletin 1995/41**

(73) Titulaire: **THOMSON multimedia
92648 Boulogne Cédex (FR)**

(72) Inventeurs:
* **BOURDON, François
F-92402 Courbevoie Cédex (FR)**
* **GUILLOTEL, Philippe
F-92402 Courbevoie Cédex (FR)**
* **AUBIE, Jean-Yves
F-92402 Courbevoie Cédex (FR)**

(74) Mandataire: **Ruellan-Lemonnier, Brigitte et al
THOMSON multimedia,
46 quai A. Le Gallo
92648 Boulogne Cédex (FR)**

(56) Documents cités:
EP-A- 0 410 826          EP-A- 0 420 653
FR-A- 2 648 590          FR-A- 2 651 399

* PATENT ABSTRACTS OF JAPAN vol. 15, no. 319
(E-1100)14 Août 1991 & JP,A,03 117 991 (VICTOR
COMPANY OF JAPAN, LTD.) 20 Mai 1991
* IEEE TRANSACTIONS ON CIRCUITS AND
SYSTEMS FOR VIDEO TECHNOLOGY vol. 2, no.
2 , 1 Juin 1992 , NEW YORK, USA pages 159 - 168
XP280655 E.D. FRIMOUT ET AL. 'Parallel
Architecture for a Pel-Recursive Motion
Estimation Algorithm'

## Description

La présente invention concerne un dispositif d'estimation hiérarchique du mouvement de séquence d'image.

Elle s'applique notamment à la réalisation de chaînes de transmission d'images en vue de réduire le débit des informations transmises.

Il est connu de la demande de brevet français publiée sous le n° FR-A-2 651 399 déposée au nom de THOMSON CONSUMER ELECTRONICS, un procédé et un dispositif d'estimation et de codage hiérarchisé du mouvement dans les séquences d'images. Ce procédé s'exécute suivant plusieurs niveaux de traitement. Il consiste selon un premier niveau à découper l'image courante en macroblocs de $2^{p+1}.2^{p+1}$ pixels et à déterminer un premier champ de vecteur mouvement, associé à cette partition au macrobloc, en utilisant un algorithme d'estimation itératif et récursif initialisé par des vecteurs mouvement estimés pour l'image précédente. Il consiste selon un deuxième niveau à découper en quadrants chacun des macroblocs et à déterminer, pour les blocs qui en résultent, un second champ de vecteur de mouvement en utilisant le même algorithme d'estimation mais initialisé par des vecteurs du champ de mouvement estimé au niveau précédent. Puis à un $i^{\text{ème}}$ niveau, il consiste à découper chacun des blocs considérés au niveau i-1 en quadrant et à déterminer, pour les blocs qui en résultent, un $i^{\text{ème}}$ champ de mouvement en utilisant le même algorithme d'estimation initialisé par des vecteurs du champ de mouvement estimé au niveau précédent, les blocs de tailles minimales étant des blocs de $2^{l+1} . 2^{l+1}$ pixels. Enfin il consiste à déterminer un champ de vecteur de mouvement final à partir des champs de vecteur de mouvement résultant en choisissant le niveau de partition le moins élevé pour lequel le vecteur mouvement associé au bloc correspondant conduit à la minimisation d'un critère traduisant les différences de luminance entre blocs se correspondant dans les images successives par les vecteurs de déplacement estimés.

Ce procédé permet d'augmenter la convergence de l'algorithme d'estimation de mouvement récursif utilisé et d'adapter au mieux l'algorithme d'estimation de mouvement au codage de type "quadtree" qui est utilisé ultérieurement pour coder le champ de mouvement résultant. Cependant, l'exécution de la boucle temporelle de l'algorithme s'avère très consommatrice en temps de calcul et sa mise en oeuvre dans un codeur HD.MAC requiert un nombre trop important de composants électroniques pour être facilement intégré à ce type de codeur.

Le document EP - A - 0 420 653 décrit un dispositif de codage/décodage d'images comprenant des circuits de codage/décodage des vecteurs mouvement. L'encodage se fait par rapport aux vecteurs mouvement entre une image courante et une image de référence dans lesquelles des blocs de pixels sont supprimés selon trois niveaux.

Le but de l'invention est de pallier les inconvénients précités.

A cet effet, l'invention a pour objet un dispositif d'estimation hiérarchique du mouvement de séquences d'images caractérisé en ce qu'il comporte un ensemble de macromodules de traitement reliés en cascade et organisés suivant des niveaux hiérarchiques, chaque macromodule étant structuré pour découper l'image courante en macroblocs d'une taille déterminée correspondant à son niveau hiérarchique pour fournir un champ de vecteur mouvement au bloc du niveau hiérarchique suivant, et comprenant des premiers circuits pour calculer les différences inter-image déplacées DFDi et les gradients à partir des valeurs de luminance des pixels de l'image vidéo et des vecteurs déplacements de chaque image précédant et suivant l'image courante; des deuxièmes circuits pour effectuer des sommations par bloc des différences inter-images déplacées et des troisièmes circuits pour effectuer des corrections des vecteurs déplacement de l'image.

L'invention a pour principal avantage d'offrir un modèle d'architecture matérielle plus simple à réaliser que celle des dispositifs antérieurs avec un nombre de niveaux de traitement nettement réduit et des temps de calcul beaucoup moins importants.

D'autres caractéristiques et avantages de l'invention apparaîtront à l'aide de la description qui suit faite en regard des figures annexées qui représentent :

- la figure 1 un mode de réalisation d'un dispositif d'estimation hiérarchique de mouvement selon l'invention ;
- la figure 2 un mode de réalisation d'un module de traitement représenté à la figure 1.

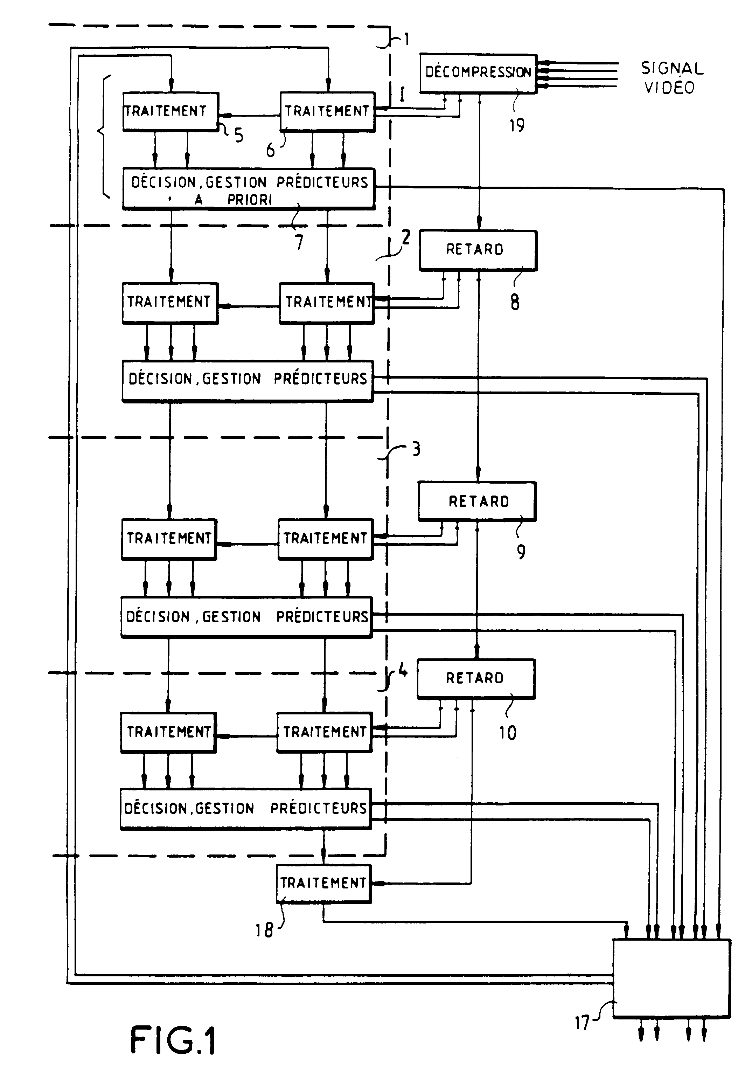

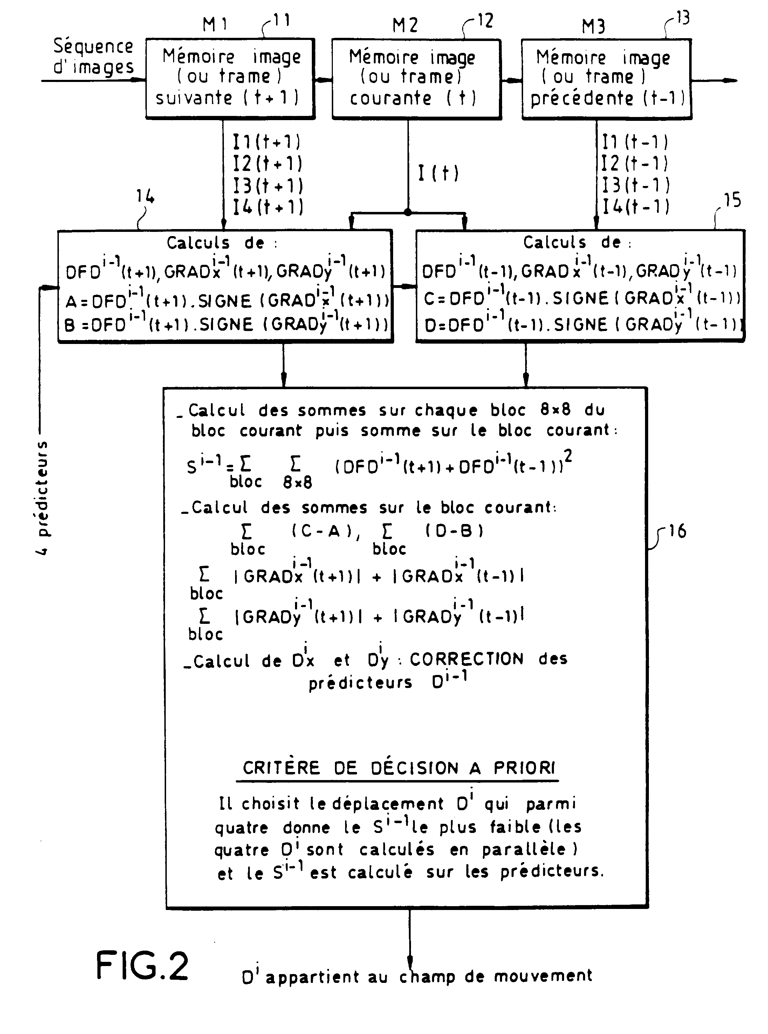

L'architecture représentée à la figure 1 est adaptée à celles connus des blocs récursifs hiérarchiques BRH des codeurs HD.MAC. Elle comporte quatre niveaux hiérarchiques (128, 64, 32 et 16) définis par la taille de découpe des blocs de l'image et quatre prédicteurs par niveau . Cette architecture est modulaire et permet d'augmenter ou de réduire le nombre de niveaux, en fonction du compromis désiré entre la précision des résultats et l'encombrement du matériel. Le dispositif représenté comporte un ensemble de quatre macromodules de traitement référencés respectivement de 1 à 4. Chaque macromodule réalise le traitement d'un niveau hiérarchique. Ils comportent chacun trois modules, deux modules de traitement 5 et 6 et un module de décision 7. Des modules de retard 8, 9 et 10 sont adjoints respectivement aux macromodules 2, 3 et 4. Chacun des modules de traitement réalise en parallèle la correction de deux prédicteurs. Le nombre de prédicteurs par niveau peut varier en utilisant un nombre plus ou moins important de ces modules. Pour un codeur HD.MAC par exemple qui comporte quatre prédicteurs, seuls deux modules de traitement sont nécessaires. Chaque module de traitement comporte de la manière représentée à la figure 2 un ensemble de trois blocs mémoires 11, 12 et 13, des blocs 14 et 15 de calcul des différences inter-images déplacées et un bloc de calcul 16 de correction des prédicteurs. Comme représenté à la figure 2, les séquences d'images sont mémorisées dans les trois mémoires 11, 12 et 13 qui contiennent respectivement l'image suivante référencées à un instant t+1, l'image courante référencée à l'instant t, et l'image précédente référencée à l'instant t-1 ainsi que les valeurs de luminance $I_1(t+1)$, $I_2(t+1)$, $I_3(t+1)$, $I_4(t+1)$ de quatre pixels entourant le pixel déplacé dans l'image suivante à la sortie de la mémoire 11, la valeur de luminance i(t) = i(z,t) du point courant z à la sortie de la mémoire 12 et les valeurs de luminance $I_1(t-1)$, $I_2(t-1)$, $I_3(t-1)$ et $I_4(t-1)$ des quatre pixels entourant le pixel déplacé dans l'image précédente à l'instant t-1. Une première étape de calcul par points donne les valeurs de différence inter-trame déplacées $DFD^{i-1}(t+1)$ et des gradients $GRAD_x^{i-1}$, $GRAD_y^{i-1(t+1)}$ à partir des valeurs de luminance issues des mémoires et des vecteurs déplacement initiaux, par rapport à l'image précédente à l'instant t-1 et par rapport à l'image suivante à l'instant t+1. D'une manière plus spécifique le bloc 14 calcule les valeurs

$$DFD^{i-1}(t+1), \ Grad_x^{i-1}(t+1), \ Grad_y^{i-1}(t+1)$$

$$A = DFD^{i-1}(t+1). \, Signe\!\left(Grad_x^{i-1}(t+1)\right)$$

$$B = DFD^{i-1}(t+1). \, Signe\!\left(Grad_y^{i-1}(t+1)\right)$$

et le bloc 15 calcule les valeurs

$$DFD^{i-1}(t-1), \ Grad_x^{i-1}(t-1), \ Grad_y^{i-1}(t-1)$$

$$C = DFD^{i-1}(t-1). \, Signe\!\left(Grad_x^{i-1}(t-1)\right)$$

$$D = DFD^{i-1}(t-1). \, Signe\!\left(Grad_y^{i-1}(t-1)\right)$$

avec

$$DFD^{i-1} = I(z,t) - I(z - D^{i-1}, t-1).$$

Les vecteurs déplacement $D^{i-1}$ sont calculés par le bloc 16 selon les formules itératives :

$$D_x^i = D_x^{i-1} - \frac{\sum\left[DFD(z - D^{i-1}, t-1)sg\!\left(grad^x(z - D^{i-1}, t-1)\right) - DFD(z + D^{i-1}, t+1)sg\!\left(grad^x(z + D^{i-1}, t+1)\right)\right]}{\sum\left[grad^x(z - D^{i-1}, t-1) + grad^x(z + D^{i-1}, t+1)\right]} \quad (1)$$

$$D_y^i = D_y^{i-1} - \frac{\sum\left[DFD(z - D^{i-1}, t-1)sg\!\left(grad^y(z - D^{i-1}, t-1)\right) - DFD(z + D^{i-1}, t+1)sg\!\left(grad^y(z + D^{i-1}, t+1)\right)\right]}{\sum\left[grad^y(z - D^{i-1}, t-1) + grad^y(z + D^{i-1}, t+1)\right]} \quad (2)$$

dans lesquelles :

- $D_x^i$ et $D_y^i$ ainsi que $D_x^{i-1}$ et $D_y^{i-1}$ sont respectivement les composantes horizontales et verticales des vecteurs mouvement $D^i$ et $D^{i-1}$ pour un bloc de pixels respectivement à l'itération i et à l'itération précédente i-1 ; après avoir calculé les sommes partielles des différences C-A et B-D sur l'ensemble du bloc correspondant de niveau n.

Lorsque les N valeurs initiales pour chaque bloc courant (N étant alors en général choisi égal à 4) correspondent à des blocs du voisinage de ce bloc courant mais d'un niveau différent, c'est-à-dire de taille immédiatement supérieure, permettent d'initialiser 4 estimations de mouvement séparées pour ce bloc et donnent lorsque les formules itératives de l'algorithme ont convergé quatre valeurs de vecteurs-mouvement mis à jour, indépendantes, qui complètent les valeurs des vecteurs de niveaux précédents, les carrés des différences inter-trames DFD intermédiaires utilisés pour les mises à jour sont calculés, stockés en mémoire et additionnés pour l'ensemble du bloc de façon à choisir pour chaque bloc à l'issue des 4 calculs, le "meilleur" déplacement parmi les quatre nouveaux vecteurs de déplacement mis à jour, c'est-à-dire celui pour lequel la somme Si des différences inter-trames élevées au carré pour ce bloc est minimale. Ce meilleur vecteur constitue alors l'un des vecteurs du champ de mouvement calculé au niveau n et noté DV128 ou DV64 ou DV32 ou DV16 suivant le niveau d'itération.

Le bloc 16 peut aussi être organisé de manière à réaliser un calcul a priori. Dans ce cas le bloc 16 applique directement les N valeurs initiales utilisées pour chaque bloc courant un critère de décision en utilisant un calcul de DFD et en choisissant comme vecteur celui qui donne la DFD minimale. Sur ce vecteur choisi, il réalise une correction de manière à obtenir les composantes du vecteur déplacement $D^i_x$ et $D^i_y$ avec les valeurs itératives données ci-dessus. Le calcul des sommes est effectué sur chaque bloc 8x8 du bloc courant, puis une somme sur le bloc courant est effectuée selon la relation

$$S^{i-1} = \sum_{\text{bloc } 8x8} \sum \left| DFD^{i-1}(t+1) + DFD^{i-1}(t-1) \right|^2$$

(DFD$^{i-1}$ étant la DFD calculée avec les vecteurs D$^{i-1}$ de même pour Grad$^{i-1}$)

Le bloc 16 effectue ensuite le calcul des sommes sur le bloc courant et le calcul de $D^i_x$ et $D^i_y$, à savoir la correction des prédicteurs D$^{i-1}$.

A l'issue de cette phase d'estimation de mouvement, un champ de vecteurs-mouvement différent correspondant à chaque niveau, c'est-à-dire à chaque taille de blocs, est disponible pour déterminer le champ de mouvement final adapté à la construction de l'arbre de codage tel qu'un arbre de codage de type "quadtree".

Une fois les quatre champs de mouvement déterminés, l'étape de convergence consiste à déterminer dans un bloc référencé par 17 sur la figure 1 le champ de mouvement final. La détermination du champ de mouvement final a lieu en examinant pour chaque bloc de taille minimale, à savoir, pour chaque bloc de taille 16x16 pixels dans le mode de réalisation représenté, les différents vecteurs-mouvement DVI qui ont été établis à chaque niveau de partition. Ainsi, pour chaque bloc de taille minimale, on a un vecteur DV128 donnant une DFD 128 établi lors de l'initialisation du processus, à savoir au niveau 1 puis un vecteur DV64 donnant une DFD 64 établi au niveau 2, un vecteur DV32 donnant une DFD 32 établi au niveau 3, et un vecteur DV16 donnant une DFD 16 établi au niveau 4. Ainsi, pour ces quatre vecteurs, le bloc 17 compare leur DFD et choisit le vecteur DVI donnant la DFDi la plus faible comme vecteur affecté à ce bloc de taille minimale dans le champ vecteur-mouvement final. Cette même sélection est effectuée pour tous les blocs 16x16 d'un macrobloc.

Les différents modules de traitements sont réalisables à l'aide de trois types d'ASIC, l'un calculant les différences inter-déplacées DFD et les gradients sur le signal vidéo, le deuxième effectuant la sommation par bloc des différences inter-images déplacées et le troisième effectuant une division de grande précision indispensable à la correction du prédicteur. L'intérêt de cette découpe réside en ce que les ASIC de type 1 et 3 n'ont besoin que de très peu de mémoire alors que l'ASIC de type 2 en nécessite beaucoup. Les problèmes de réalisation, conception, test et consommation sont alors mieux répartis. Toutefois il est concevable dans un futur proche de pouvoir fondre ces trois types en un seul. La réduction d'encombrement de cette partie très répétitive conduit alors à une réduction non négligeable de l'ensemble du dispositif.

Pour éviter que l'accès aléatoire des valeurs des pixels dans les images précédentes et suivantes pour les calculs de DFD et de gradients soit une opération très coûteuse en mémoire, une première solution pourra consister à utiliser quatre circuits simples fournissant à fréquence point les quatre valeurs des pixels de la maille. Cela permet de n'avoir qu'une voie par prédicteur, chaque voie travaillant en parallèle. Une amélioration peut aussi consister à utiliser des circuits fournissant plusieurs points d'une fenêtre pointée par le prédicteur, et donc plusieurs mailles d'un seul coup. En traitant N points d'un coup (fournissant N DFD et N gradients), on peut alors utiliser le même circuit pour N-1 autres prédicteurs. Ce qui revient à dire que grâce à cette amélioration qui ne coûte pas plus cher en mémoire, on peut faire l'accès aléatoire de plusieurs prédicteurs en série et non en parallèle, ce qui réduit l'encombrement de façon significative.

L'architecture présente un autre avantage pour le calcul des sommes de différence inter-images déplacées DFDi suivant les niveaux i 128, 64, 32 et 16 calculés pour chaque bloc de taille 16x16 d'un macrobloc. En effet dans le cas d'un calcul a priori les décisions sont prises en comparant les sommes S(i-1) c'est-à-dire les sommes de DFDi calculées sur les prédicteurs, alors que pour la convergence, la décision est prise en comparant les sommes S(i) c'est-à-dire les sommes de DFDi calculées sur les vecteurs sommés sur des blocs de taille 16x16 quelque soit le niveau hiérarchique. Pour ne pas recalculer les sommes S(i) à partir des vecteurs, le dispositif permet de définir les prédicteurs de chaque niveau i à partir des vecteurs de niveau i-1. Ainsi en effectuant les sommes sur des blocs 16x16 quelque soit i, les différences inter-images déplacées DFDi sur les prédicteurs, cela revient à calculer directement les sommes qui servent à la convergence du niveau i-1 avec un coût matériel très faible. Dans une appplication HD.MAC les sommes S(i) 128 sont calculées au niveau 64, les sommes S(i) 64 sont calculées au niveau 32, les sommes S(i) 32 sont calculées au niveau 16, et les sommes S(i-1) 16 sont alors calculées avec un module de traitement supplémentaire représenté avec la référence 18 sur la figure 1 dont seul une voie est équipée. Etant donné que c'est le module de décision qui reçoit les informations provenant des modules de traitement il est judicieux de l'utiliser à la fois pour générer des prédicteurs de niveaux suivants et pour fournir à la convergence les vecteurs des i et les sommes S(i-1). Les modules de retard 8, 9 et 10 sont essentiellement constitués de mémoires pour réaliser les retards de compensation du signal vidéo afin de le fournir correctement en phase aux différents niveaux hiérarchiques. Ces modules peuvent être mis en cascade pour permettre une compensation de retard que sur un seul niveau hiérarchique. De plus un module retard 19 est placé en tête du module de traitement 1 pour effectuer en tête du système une décompression consistant à multiplier par deux la durée d'une ligne vidéo et donc de multiplier par deux la durée d'une trame dans le cas où le champ de mouvement n'est calculé qu'une image sur deux comme c'est le cas du HD.MAC. Cette décompression permet de diviser par deux la fréquence de traitement de tout le reste du dispositif.

## Revendications

1. Dispositif d'estimation hiérarchique du mouvement de séquences d'images caractérisé en ce qu'il comporte un ensemble de macromodules de traitement (1, 2, 3, 4) reliés en cascade et organisés suivant des niveaux hiérarchiques, chaque macromodule étant structuré pour découper l'image courante en macroblocs d'une taille déterminée correspondant à son niveau hiérarchique pour fournir un champ de vecteur mouvement au bloc du niveau hiérarchique suivant, et comprenant des premiers circuits (5, 6 ; 14, 15) pour calculer les différences inter-image déplacées DFDi et les gradients à partir des valeurs de luminance des pixels de l'image vidéo et des vecteurs déplacements de chaque image précédant et suivant l'image courante; des deuxièmes circuits (5, 6, 16) pour effectuer des sommations par bloc des différences inter-images déplacées et des troisièmes circuits (16) pour effectuer des corrections des vecteurs déplacement de l'image.

2. Dispositif selon la revendication 1 caractérisé en ce que chaque macromodule (1, 2, 3, 4) comporte au moins un module de traitement (5, 6) couplé à un module de décision (7).

3. Dispositif selon la revendication 2 caractérisé en ce que chaque module de traitement (5, 6) réalise la correction d'au moins deux prédicteurs.

4. Dispositif selon l'une quelconque des revendications 1 à 3 caractérisé en ce que chaque macromodule effectue les sommes des différences inter-image déplacées d'un niveau hiérarchique pour les transmettre au macromodule de niveau hiérarchique inférieur.

5. Dispositif selon l'une quelconque des revendications 1 à 4 caractérisé en ce que les macromodules (1, 2, 3, 4) effectuent un accès aléatoire aux blocs maillés des différents prédicteurs dans les images précédentes et suivantes soit en parallèle avec un accès aux mailles seules, soit en série avec un accès à une fenêtre plus étendue.

## Patentansprüche

1. Vorrichtung zur hierarchischen Bewegungsschätzung von Bildsequenzen,
dadurch gekennzeichnet, daß
sie einen Satz von in Kaskade verbundenen Verarbeitungs-Makromodulen (1, 2, 3, 4) enthält, die entsprechend hierarchischen Stufen organisiert sind, daß jedes Makromodul so aufgebaut ist, daß es das laufende Bild in Makroblöcke mit einer bestimmten Größe zerlegt, die seiner hierarchischen Stufe entspricht, um ein Feld von Bewegungsvektoren für den Block der folgenden hierarchischen Stufe zu bilden, und daß die Vorrichtung erste Schaltungen (5, 6; 14, 15) zum Berechnen der versetzten Differenzen zwischen den Bildern DFDi und der Gradienten aus den Luminanzwerten der Pixel des Videobildes und den Versatzvektoren jedes Bildes, das dem laufenden Bild vorangeht oder auf dieses folgt, sowie zweite Schaltungen (5, 6, 16) zur Durchführung von Summierungen je Block der Versatzdifferenzen zwischen den Bildern und dritte Schaltungen (16) zur Durchführung von Korrekturen der Versatzvektoren des Bildes enthält.

2. Vorrichtung nach Anspruch 1,
dadurch gekennzeichnet, daß jedes Makromodul (1, 2, 3, 4) wenigstens ein Verarbeitungsmodul (5, 6) enthält, das mit einem Entscheidungsmodul (7) verbunden ist.

3. Vorrichtung nach Anspruch 2,
dadurch gekennzeichnet, daß jedes Verarbeitungsmodul (5, 6) die Korrektur von wenigstens zwei Prädiktoren bewirkt.

4. Vorrichtung nach einem der Ansprüche 1 bis 3,
dadurch gekennzeichnet, daß jedes Makromodul die Summen der Versatzdifferenzen zwischen den Bildern einer hierarchischen Stufe bildet, um sie zu dem Makromodul der niedrigeren hierarchischen Stufe zu übertragen.

5. Vorrichtung nach einem der Ansprüche 1 bis 4,
dadurch gekennzeichnet, daß die Makromodule (1, 2, 3, 4) einen Zufallszugriff zu den Blöcken bewirken, die mit den verschiedenen Prädiktoren in den vorangehenden und folgenden Bildern verknüpft sind, sei es parallel mit einem Zugriff zu einzelnen Gitterzellen, sei es in Reihe mit einem Zugriff zu einem ausgedehnteren Fenster.

## Claims

1. Device for the hierarchical estimation of the motion of image sequences, characterized in that it comprises a set of processing macromodules (1, 2, 3, 4) cascaded together and organized according to hierarchical levels, each macromodule being structured so as to partition the current image into macroblocks of a specified size corresponding to its hierarchical level so as to deliver a motion vector field to the block of the next hierarchical level, and comprising first circuits (5, 6; 14, 15) for calculating the displaced inter-image differences DFDi and the gradients on the basis of the luminance values of the pixels of the video image and the displacement vectors of each image preceding and following the current image; second circuits (5, 6, 16) for performing blockwise summations of the displaced inter-image differences and third circuits (16) for making corrections to the displacement vectors of the image.

2. Device according to Claim 1, characterized in that each macromodule (1, 2, 3, 4) comprises at least one processing module (5, 6) coupled to a decision module (7).

3. Device according to Claim 2, characterized in that each processing module (5, 6) carries out the correction of at least two predictors.

4. Device according to any one of Claims 1 to 3, characterized in that each macromodule produces the sums of the displaced inter-image differences of a hierarchical level so as to transmit them to the macromodule of lower hierarchical level.

5. Device according to any one of Claims 1 to 4, characterized in that the macromodules (1, 2, 3, 4) perform a random access to the meshed blocks of the various predictors in the preceding and following images either in parallel with an access to the mesh cells alone, or in series with an access to a more extensive window.

FIG.1

Séquence d'images

| M1 $\overset{\frown}{}$11 | M2 $\overset{\frown}{}$12 | M3 $\overset{\frown}{}$13 |
|---|---|---|
| Mémoire image (ou trame) suivante (t+1) | Mémoire image (ou trame) courante (t) | Mémoire image (ou trame) précédente (t-1) |

I1(t+1)
I2(t+1)
I3(t+1)
I4(t+1)

I(t)

I1(t-1)
I2(t-1)
I3(t-1)
I4(t-1)

14

15

Calculs de :

$DFD^{i-1}(t+1), GRADx^{i-1}(t+1), GRADy^{i-1}(t+1)$

$A = DFD^{i-1}(t+1).SIGNE(GRAD^{i-1}_x(t+1))$

$B = DFD^{i-1}(t+1).SIGNE(GRADy^{i-1}(t+1))$

Calculs de :

$DFD^{i-1}(t-1), GRADx^{i-1}(t-1), GRADy^{i-1}(t-1)$

$C = DFD^{i-1}(t-1).SIGNE(GRADx^{i-1}(t-1))$

$D = DFD^{i-1}(t-1).SIGNE(GRADy^{i-1}(t-1))$

4 prédicteurs

16

_Calcul des sommes sur chaque bloc 8×8 du bloc courant puis somme sur le bloc courant :

$$S^{i-1} = \sum_{bloc} \sum_{8\times8} (DFD^{i-1}(t+1) + DFD^{i-1}(t-1))^2$$

_Calcul des sommes sur le bloc courant :

$$\sum_{bloc} (C-A), \quad \sum_{bloc} (D-B)$$

$$\sum_{bloc} |GRADx^{i-1}(t+1)| + |GRADx^{i-1}(t-1)|$$

$$\sum_{bloc} |GRADy^{i-1}(t+1)| + |GRADy^{i-1}(t-1)|$$

_Calcul de $Dx^i$ et $Dy^i$ : CORRECTION des prédicteurs $D^{i-1}$

## CRITÈRE DE DÉCISION A PRIORI

Il choisit le déplacement $D^i$ qui parmi quatre donne le $S^{i-1}$ le plus faible (les quatre $D^i$ sont calculés en parallèle) et le $S^{i-1}$ est calculé sur les prédicteurs.

# FIG.2

$D^i$ appartient au champ de mouvement